# EUROPEAN PATENT SPECIFICATION

(11) **EP 4 072 845 B1**
(45) Date of publication and mention of the grant of the patent: **22.11.2023**
(21) Application number: 20851392.9
(22) Date of filing: 10.12.2020
(51) Int. Cl.: B29D 30/24, B29D 30/26, B29D 30/20

(54) **FORMING DRUM FOR PRODUCING TYRES FOR VEHICLE WHEELS AND METHOD FOR CONTROLLING THE GEOMETRY OF A FORMING DRUM FOR PRODUCING TYRES FOR VEHICLE WHEELS**
FORMTROMMEL ZUR REIFENHERSTELLUNG FÜR FAHRZEUGRÄDER UND VERFAHREN ZUR STEUERUNG DER GEOMETRIE EINER FORMTROMMEL ZUR REIFENHERSTELLUNG FÜR FAHRZEUGRÄDER
TAMBOUR DE FORMAGE POUR LA PRODUCTION DE PNEUS DESTINÉS À DES ROUES DE VÉHICULE ET PROCÉDÉ DE CONTRÔLE DE LA GÉOMÉTRIE D'UN TAMBOUR DE FORMAGE POUR LA PRODUCTION DE PNEUS DESTINÉS À DES ROUES DE VÉHICULE

(30) Priority: 11.12.2019 IT 201900023616
(43) Date of publication of application: 19.10.2022
(73) Proprietor: Pirelli Tyre S.p.A., 20126 Milano (IT)
(72) Inventor: CONTI, Davide, 20126 Milano (IT); DE COL, Christian, 20126 Milano (IT); PORTINARI, Gianni Enrico, 20126 Milano (IT)
(74) Representative: Porta & Consulenti Associati S.p.A.
(86) International application number: PCT/IB2020/061722
(87) International publication number: WO 2021/116953

(56) References cited:
- WO-A1-2008/099236
- JP-A- H03 203 632
- US-A- 3 765 987

## Description

The present invention relates to a forming drum for producing tyres for vehicle wheels and a method for controlling the geometry of a forming drum for producing tyres for vehicle wheels.

A tyre for vehicle wheels generally comprises a carcass structure, a crown structure arranged in radially outer position with respect to the carcass structure and a pair of sidewalls that represent the axially outer surfaces of the tyre, with respect to a mid-plane perpendicular to the rotation axis of the same tyre.

The carcass structure comprises at least one carcass ply formed from reinforcing cords incorporated in a matrix of elastomeric material. The carcass ply has opposite end edges respectively engaged to annular anchoring structures. The latter are arranged in the zones of the tyre usually identified with the name "beads" and are normally each formed from a substantially circumferential annular insert called "bead core" on which at least one filling insert is applied, in radially outer position, radially tapering going away from the rotation axis.
At the beads it is possible to provide specific reinforcing structures having the function of improving the transmission of torque to the tyre.

In the case of "tubeless" tyres, i.e. without air chamber, a layer of elastomeric material, generally known as "liner", can also be provided in radially inner position with respect to the carcass structure to provide the necessary impermeability to the inflation air of the tyre. Generally, the liner extends from one bead to another.

The crown structure comprises a belt structure and, in radially outer position with respect to the belt structure, a tread band made of elastomeric material.

The belt structure comprises one or more belt layers arranged radially juxtaposed over one another, having textile or metallic reinforcing cords having orientation substantially parallel to the direction of circumferential extension of the tyre (zero degrees layer) and/or having crossed orientation.

Between the carcass structure and the belt structure it is possible to provide a layer of elastomeric material, called "underbelt", having the function of making the radially outer surface of the carcass structure as uniform as possible for the subsequent application of the belt structure.

Longitudinal and transversal grooves, arranged to define a desired tread pattern, are typically shaped onto the tread band. Between the tread band and the belt structure it is possible to interpose a so-called "underlayer" made of elastomeric material of suitable properties for obtaining a stable union of the belt structure with the tread band itself.

The sidewalls are made of elastomeric material and represent the axially outer surfaces with respect to the annular anchoring structures, to the carcass ply(-ies), to the belt layer(s) and possibly to at least one portion of tread band. For example, the sidewalls each extend from one of the lateral edges of the tread band up to the respective annular anchoring structure to the beads.

The term "elastomeric material" is meant to indicate a composition comprising at least one elastomeric polymer and at least one reinforcing filler. Such a composition can also comprise additives like, for example, a cross-linking agent and/or a plasticizer. Thanks to the presence of the cross-linking agent, such a material can be crosslinked through heating, so as to form the final manufactured product.

The term "green tyre" is meant to indicate a tyre obtained from the building process and not yet molded and vulcanized.

The term "finished tyre" is meant to indicate a tyre obtained by subjecting a green tyre to a molding and vulcanization process.

The term "tyre" is meant to indicate a finished tyre or a green tyre.

The terms "axial", "axially", "radial", "radially", "circumferential" and "circumferentially" are used with reference to a forming drum used in the production process of the tyre.

In particular, the terms "axial" and "axially" are meant to indicate references/magnitudes arranged/measured or extending in a direction substantially parallel to a geometric rotation axis of the forming drum.

The terms "radial" and "radially" are meant to indicate references/magnitudes arranged/measured or extending in a direction substantially perpendicular to a geometric rotation axis of the forming drum and lying in a plane comprising such a geometric rotation axis.

The terms "radially inner/outer" are meant to indicate, respectively, a position closer to or further from the aforementioned geometric rotation axis of the forming drum.

The terms "axially inner/outer" are meant to indicate, respectively, a position closer to and further from a mid-plane perpendicular to the geometric rotation axis of the forming drum.

The terms "circumferential" and "circumferentially" are meant to indicate references/magnitudes arranged/measured or extending along a circumference that extends around the geometric rotation axis of the forming drum.

The term "structural component" of a tyre is meant to indicate any portion thereof capable of performing its function or a part thereof. For example, the following components are structural components of the tyre: the carcass structure, the crown structure, or parts thereof, like liner, underliner, anti-abrasion inserts, bead core, filling inserts in the zone of the bead (and thus the annular anchoring structures defined by bead cores and respective filling inserts), carcass ply(-ies), belt layer(s), belt underlayer, underlayer of the tread band, sidewalls, sidewall inserts, tread band, textile or metallic reinforcements, reinforcing elements made of elastomeric material etc., or a part thereof.

The term "tyre being processed" is meant to indicate a tyre in any step of the related production process that goes from the building of at least one structural component constituting the carcass structure and/or the crown structure until the finished tyre is obtained. For example, a tyre being processed is that which enter into/exits from the work station dedicated to the application of the annular anchoring structures on the opposite end edges of the carcass ply(-ies) previously deposited on a forming drum and to the turning up of such end edges around the aforementioned annular anchoring structures.

The term "machine down times" is meant to indicate the period of time in which a tyre production plant is not operating due to format-change operations of the production batches.

The production cycles of a tyre provide that, after a building process of a green tyre in which the various structural components of the tyre itself are built and assembled, the green tyres are transferred into a molding and vulcanization line where a molding and vulcanization process is carried out that is adapted for defining the structure of the finished tyre according to a desired geometry and tread pattern.

The building of the structural components of the tyres and the subsequent assembly thereof takes place on suitable forming drums. For example, the carcass structure can be built on a first forming drum, known as first stage drum, and the crown structure can be built on a second forming drum, known as auxiliary or second stage drum. The assembly of the carcass structure to the crown structure can take place on the first forming drum in which case the first stage drum takes the name "unistage" drum or on a different forming drum, known as shaping drum.

WO 2007/096629 describes a forming drum for making tyres that comprises a plurality of segments defining an outer circumference of the forming drum, wherein the segments are divided into two series, one series being positioned on each opposite side of a transversal central plane of the forming drum. The two series of segments are configured to be actuated by a hub assembly rotating between a collapsed condition in which a tyre carcass can be removed from the forming drum and an expanded position in which a tyre carcass can be formed on the forming drum. The forming drum also comprises the mounting of every series of segments to actuate a selective relative axial positioning of the two series and means arranged outside of the rotation axis of the drum to adjust the overall work width of the drum. Preferably, one series of segments is associated with an inner hub located on a side of the transversal central plane and the other series of segments is associated with an outer hub located on the opposite side of the transversal central plane. The means for adjusting the overall working width of the drum comprise a first series of inner endless screws associated with the inner hub and a second series of outer endless screws associated with the outer hub, the first and second series of endless screws being configured to rotate with respect to one another so that the rotation of the outer endless screws causes the relative movement of the inner endless screws and the control in the axial separation of the inner hub and of the outer hub.

US 4,151,035 describes a forming drum axially mounted on a hollow shaft. A plurality of arched segments is positioned around the drum by means of a plurality of stems. Shoulders, preferably provided at each end portion of the forming drum, are fixed coaxially and slidably to the hollow shaft of the drum. Each shoulder is axially held during the tyre building operations through groups of tie rods, with each group comprising tie rods arranged around the hollow shaft with threaded end parts. The tie rods are rigidly fixed to the outside of the hollow shaft at end portions by mounting eyelets and bolts on the right end and flanges and bolts on the left side. The tie rods are, in turn, fixed to the eyelet and to the flange by lock nuts. When an axial resetting is desired, the lock nuts are unscrewed from the end portions of the tie rods so that the tie rods are free to slide axially through the eyelet and the flange.

WO 2008/099236 to the same Applicant describes a forming drum having two halves supported by a central shaft that extends along a geometric axis of the drum. The halves can be axially moved towards one another, for example upon command of a threaded bar, which is arranged operatively inside the central shaft and which provides for two threaded portions, a right one and a left one, respectively, each of them engaging one of the halves. The halves of the forming drum are consequently induced to shift simultaneously in directions respectively opposite along the central shaft after rotations imparted on the threaded bar through an actuator that can be operatively coupled with an end of the central shaft.

The Applicant has observed that depending on the width of the tread band and the sidewall height of a finished tyre, the space in the axial direction on the forming drum necessary to make the same is different. In particular, the Applicant has observed that as the width of the tread band and the sidewall height increases, the space in the axial direction on the forming drum necessary to make that model of tyre increases.

The Applicant has observed that theoretically every combination of width of tread band and sidewall height needs a forming drum of predetermined axial size.

Despite having the possibility of using the same forming drum for two or more combinations of width of tread band and sidewall height, the Applicant has noted that it would be necessary to manage forming drums with different extensions in the axial direction and provide a specific store for the various drums.

The Applicant has felt the need to manage the forming drums without having to provide a specific store of large size, whilst still ensuring the possibility of selecting the forming drum as a function of the combination of width of tread band and sidewall height of the tyre to be made.

The Applicant has observed that the forming drum described in document WO 2008/099236 makes it possible to use a same forming drum to build tyres having different combinations of width of tread band and sidewall height, since the axial extension of the forming drum can be changed by imparting rotations on the threaded bar arranged inside the central shaft.

The Applicant has verified that by rotating the threaded bar arranged inside the central shaft, an axial movement of both half-parts of the forming drum of size directly proportional to the angular rotation to which the threaded bar has been subjected is actuated.

The Applicant has noted that it is possible to axially widen and narrow the forming drum (between a maximum value and a minimum value) with substantial continuity, in other words without discrete passages between a possible axial extension reachable and the previous or next axial extension reached or reachable by the forming drum.

The Applicant has verified that this effectively makes it possible to use a same forming drum to build tyres with any combination, falling within a range of maximum value and minimum value, between width of the tread band and sidewall height.

The Applicant has however observed that a "continuous" adjustment of the axial extension of the forming drum requires precise and reliable controls on the size reached; moreover, the mechanisms intended for such adjustment must in every condition of use keep the axial extension fixed without allowing "reversible" movements of the members making up such mechanisms, for example in the case of accidental or sudden impacts during the processing cycle.

More precisely, the Applicant has verified that a continuous measurement of the axial extension progressively taken up by the forming drum can require measuring tools that are complex to use which can provide imprecise indications if not used correctly; moreover, during use, after axial stresses on the sectors, there can be slight reversibility of the axial adjustment with loss of the axial position of the sectors due to vibrations or small impacts undergone in the movement of the drum itself.

The Applicant has also observed that in modern highly automated building lines it is very advantageous to proceed to the change of axial size of a forming drum as quickly as possible to reduce the machine down times (and thus "line stop times") without however compromising the possibility of being able to use a same forming drum to build tyres with different combinations of width of the tread band and sidewall height falling within a range of maximum value and minimum value.

The Applicant has finally observed that in the current use it is not necessary to be able to have, within a range of maximum and minimum values of axial extension, a continuous variation of possible axial extensions that can be actuated by the forming drum, since the actual number of possible axial extensions necessary to build tyres is a finite number, although high.

The Applicant has indeed verified that there is a tolerance between the axial extension of the forming drum and the axial extension actually occupied by the tyre being processed, so that two combinations of width of tread band and sidewall height of the finished tyre that are different from one another but the difference of which falls within the quoted tolerance can be built on a forming drum having a same axial extension.

The Applicant has thus found that by providing a threaded bar inside the central shaft that can be rotated only in discrete and predetermined steps it is possible to associate, with certainty and in a predetermined manner, every discrete and predetermined step of rotation of the threaded bar with an amount of axial movement of the two half-parts of the forming drum. Depending on the selected discrete step of rotation it is also possible to predetermine the minimum amount of increase or decrease of the axial extension of the forming drum.

The present invention therefore relates, in a first aspect thereof, to a forming drum for producing tyres for vehicle wheels according to claim 1.

The Applicant deems that the forming drum according to the present invention makes it possible to minimize the machine down times since the actuation device can be set in rotation with respect to the central shaft preferably without having to remove the forming drum from the building line. The Applicant has indeed verified that it may be sufficient to lock the adjustment shaft and rotate the central shaft (possibly using the same actuator to rotate the central shaft used during the normal operation of the forming drum) or to hold stopped in rotation the central shaft (also in this case possibly using the same actuator used during the operation of the forming drum) and rotate the adjustment shaft to make a change in axial size of the drum.

The Applicant has also verified that the locking device and the relative locking positions that it makes make it possible to interrupt the relative rotation between central shaft and adjustment shaft after a predetermined relative rotation and, thus, after a predetermined relative axial movement between the two lateral deposition surfaces, making it possible to avoid a continuous measurement of the axial extension progressively taken up by the drum during the relative rotation between central shaft and adjustment shaft. In the experience of the Applicant this, as well as making it possible to minimize the machine down time, increases the precision in determining the axial size taken up by the drum.

The Applicant has verified that in the forming drum according to the present invention it may be sufficient to proceed with a static measurement (in other words without moving parts) of the forming drum in the new configuration of axial size for the sole purpose of verifying the actual reaching of the new axial size.

In a second aspect thereof, the invention relates to a method for controlling the geometry of a forming drum for producing tyres for vehicle wheels according to claim 11.

The Applicant deems that, in this way, a predetermined rotation of the adjustment shaft with respect to the central shaft corresponds to a predetermined axial movement of the two deposition surfaces and thus a predetermined axial size of the forming drum.

In at least one of the aforementioned aspects, the present invention can have at least one of the preferred features described hereinafter.

Preferably, the locking device comprises at least one first locking element connected to the actuation device and at least one second locking element connected to the central shaft.

Preferably, the first locking element and the second locking element are in mutual engagement when the locking device is in the first condition.

Preferably, the first locking element and the second locking element are not in mutual engagement when the locking device is in the second condition.

Preferably, the relative rotation between the adjustment shaft and the central shaft takes place for an identical angular quantity between two mutually successive locking positions.

In this way, any two mutually successive locking positions are reached always with a same relative rotation between central shaft and adjustment shaft.

Preferably, the at least one first locking element and the at least one second locking element are mutually engageable at least once after a rotation of 360° between the actuation device and the central shaft.

Preferably, starting from a locking position, at a relative rotation of 360° between adjustment shaft and central shaft a further locking position is reached.

Preferably, said locking position is actuated by said at least one first locking device.

Preferably, said further locking position is actuated by the same at least one first locking device.

In this way, starting from a stable axial size taken up by the forming drum, every mutual rotation of 360° between the actuation device and the central shaft corresponds to a new predetermined axial size of the forming drum.

Preferably, the actuation device is provided with at least two first locking elements angularly spaced apart by 180°.

Preferably, the central shaft is provided with at least two second locking elements angularly spaced apart by 180°.

Preferably, at every relative rotation of 360° between adjustment shaft and central shaft at least two locking positions are intercepted.

In this embodiment, starting from a stable axial size taken up by the forming drum, every mutual rotation of 360° between the actuation device and the central shaft corresponds to two mutually successive and increasing (or decreasing as a function of the direction of relative rotation) predetermined axial sizes of the forming drum.

Preferably, the adjustment linkage is configured so that a relative rotation of 180° between the actuation device and the central shaft corresponds to a predetermined relative shifting between the two lateral deposition surfaces. Such a relative shifting preferably defines the minimum axial expansion/contraction step of the forming drum.

Preferably, a relative rotation of 180° between the actuation device and the central shaft corresponds to a shifting of the two lateral deposition surfaces greater than about 1 millimeter.

Preferably, a relative rotation of 180° between the actuation device and the central shaft corresponds to a shifting of the two lateral deposition surfaces of less than about 10 millimeters.

Preferably, a relative rotation of 180° between the actuation device and the central shaft corresponds to a shifting of the two lateral deposition surfaces comprised between about 1 and about 10 millimeters including extreme values.

Preferably, a relative rotation of 180° between the actuation device and the central shaft corresponds to a shifting of the two lateral deposition surfaces greater than about 2 millimeters.

Preferably, a relative rotation of 180° between the actuation device and the central shaft corresponds to a shifting of the two lateral deposition surfaces of less than about 5 millimeters.

Preferably, a relative rotation of 180° between the actuation device and the central shaft corresponds to a shifting of the two lateral deposition surfaces comprised between about 2 and about 5 millimeters including extreme values.

Preferably, a relative rotation of 180° between the actuation device and the central shaft corresponds to a shifting of the two lateral deposition surfaces of about 2.5 millimeters.

Preferably, the second locking element comprises a pin moveable with respect to the central shaft between a stop condition in which it engages the first locking element and a release condition in which it does not engage the first locking element.

Preferably, the pin is slidable along an axial direction in a first direction between the stop condition and the release condition and in a second direction, opposite the first, between the release condition and the stop condition.

Preferably, the second locking element also comprises an elastic element connected to the pin and active between the pin and the central shaft; the elastic element axially pushing the pin in the stop condition.

Preferably, the central shaft comprises a housing seat for the pin; the pin being axially slidable inside the housing seat.

Preferably, the first locking element comprises a seat in the actuation device engageable by a head of the pin when in the stop condition.

Preferably, the actuation device is arranged at a first axial end of the central shaft; a support device fixedly connected to the central shaft and rotatable with respect to the adjustment shaft of the adjustment linkage being arranged on a second axial end, opposite the first, of the central shaft.

Preferably, the support device comprises at least one first pair of coupling elements configured to be engaged by a movement device outside the forming drum.

Preferably, the actuation device comprises at least one second pair of coupling elements configured to be engaged by a movement device outside the forming drum.

Preferably, the adjustment shaft comprises a first threaded portion with right or left spiral and a second threaded portion with opposite spiral to the spiral of the first threaded portion.

Preferably, at least one first carriage, connected to one of the two lateral deposition surfaces, is mounted on the first threaded portion and at least one second carriage connected to the other of the two lateral deposition surfaces is mounted on the second threaded portion.

Preferably, the central shaft comprises openings that extend in the axial direction and that are crossed in the radial direction by respective brackets connected to the first carriage and to the second carriage; each bracket connecting a respective first carriage or second carriage to a respective lateral deposition surface.

Preferably, a central deposition surface is provided, arranged between the two lateral deposition surfaces; the central deposition surface being radially outside the central shaft and rotatably coupled with the central shaft.

Preferably, the two lateral deposition surfaces comprise end portions axially facing towards the central deposition surface and configured to insert radially inside the central deposition surface.

Preferably, rotating the adjustment shaft with respect to the central shaft comprises releasing the adjustment shaft from the locking position.

Preferably, the relative rotation between the adjustment shaft and the central shaft is actuated by locking the adjustment shaft and rotating the central shaft.

Preferably, it is provided for the provide at least one first locking device operating on the adjustment shaft between a first condition in which it prevents the rotation of the adjustment shaft with respect to the central shaft and a second condition in which it allows the rotation of the adjustment shaft with respect to the central shaft.

Further features and advantages of the present invention will become clearer from the following detailed description of preferred embodiments thereof, made with reference to the attached drawings.

In such drawings:
- Figure 1 is a schematic perspective view of a forming drum for tyres for vehicle wheels in accordance with the present invention;
- Figure 2 is a schematic side view of the drum of Figure 1 with some parts removed in order to better highlight others;
- Figure 3 is a schematic perspective view of some parts of the drum of Figure 1;
- Figure 4 is a schematic perspective view of some parts of the drum of Figure 1;
- Figure 5 is a schematic perspective view of some parts of the drum of Figure 1;
- Figure 6 is an enlarged schematic perspective view of some details of Figure 5; and
- Figure 7 is a schematic perspective view of some parts of the drum of Figure 1.

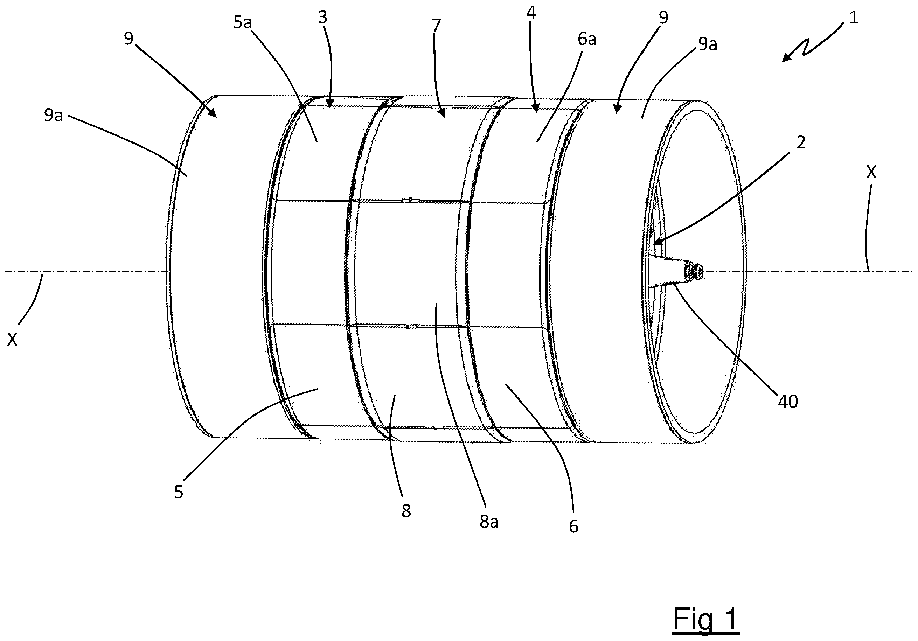

In Figures 1-7, reference numeral 1 wholly indicates a forming drum for tyres for vehicle wheels in accordance with the present invention.

The drum 1 comprises a central shaft 2 having axial extension crossed by a geometric axis X about which the drum 1 is able to rotate.

In radially outer position with respect to the central shaft 2 there are two lateral deposition surfaces 3, 4, substantially cylindrical, mutually axially opposite and set in rotation by the central shaft 2.

The lateral deposition surfaces 3, 4 each comprise respective first sectors 5 and second sectors 6. The radially outer surfaces 5a of the first sectors 5 are mutually arranged, at least in a deposition condition of the drum 1, so as to create a substantially continuous surface that defines the lateral deposition surface 3. Similarly, the radially outer surfaces 6a of the second sectors 6 are mutually arranged, at least in the deposition condition of the drum 1, so as to create a substantially continuous surface that defines the lateral deposition surface 4.

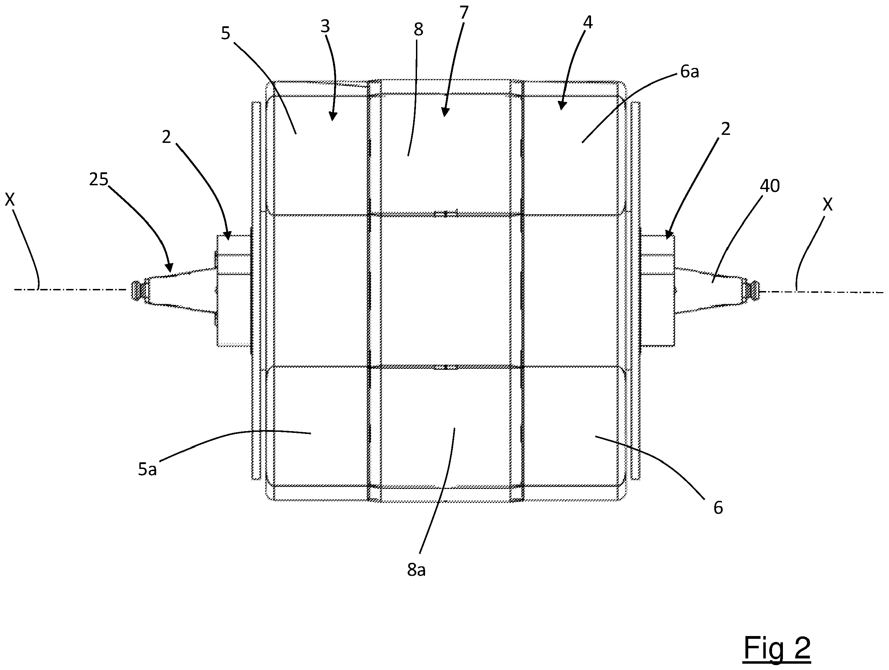

In the preferred embodiment of the invention, the lateral deposition surfaces 3, 4 are radially moveable with respect to the central shaft 2 between a deposition condition (illustrated in Figures 1 and 2) and a service condition (not illustrated). In particular, in the deposition condition the first sectors 5 and the second sectors 6 are taken radially away from the central shaft 2 and in the service condition the first sectors 5 and the second sectors 6 are taken radially closer to the central shaft 2. The service condition can for example be actuated to remove a carcass structure, a belt structure or a tyre being processed by the forming drum 1.

In the preferred embodiment of the invention, a central deposition surface 7 is provided arranged axially between the two lateral deposition surfaces 3, 4, as shown in Figures 1 and 2.

The central deposition surface 7 comprises third sectors 8. The radially outer surfaces 8a of the third sectors 8 are mutually arranged, at least in a deposition condition of the drum 1, so as to create a substantially continuous surface that defines the central deposition surface 7. The central deposition surface 7 is radially moveable with respect to the central shaft 2 between a deposition condition (illustrated in Figures 1 and 2) and a service condition (not illustrated). In particular, in the deposition condition the third sectors 8 are taken radially away from the central shaft 2 and in the service condition the third sectors 8 are taken radially towards the central shaft 2. In the service condition, the central deposition surface 7 and the two lateral deposition surfaces 3, 4 are substantially mutually radially aligned.

The third sectors 8 are axially connected to the first sectors 5 and to the second sectors 6 in a slidable manner. The third sectors 8 are rigidly radially connected to the first sectors 5 and to the second sectors 6 so that a radial movement of the third sectors 8 causes a same radial movement of the first sectors 5 and of the second sectors 6 and so that a radial movement of the first sectors 5 and of the second sectors 6 causes a same radial movement of the third sectors 8. The third sectors 8 are rigidly rotatably connected to the first sectors 5 and to the second sectors 6 so that a rotation of the third sectors 8 around the geometric axis X causes a same rotation about the geometric axis X of the first sectors 5 and of the second sectors 6 and so that a rotation of the first sectors 5 and of the second sectors 6 about the geometric axis X causes a same rotation about the geometric axis X of the third sectors 8.

Auxiliary support elements 9 are provided in axially outer position with respect to the two deposition surfaces 3, 4, as shown in Figure 1. The auxiliary support elements 9 are preferably annular and comprise a radially outer surface 9a substantially aligned with the lateral deposition surfaces 3, 4, when in the deposition condition. Each auxiliary support element 9 is axially constrained, in a removable manner, to a respective lateral deposition surface 3, 4.

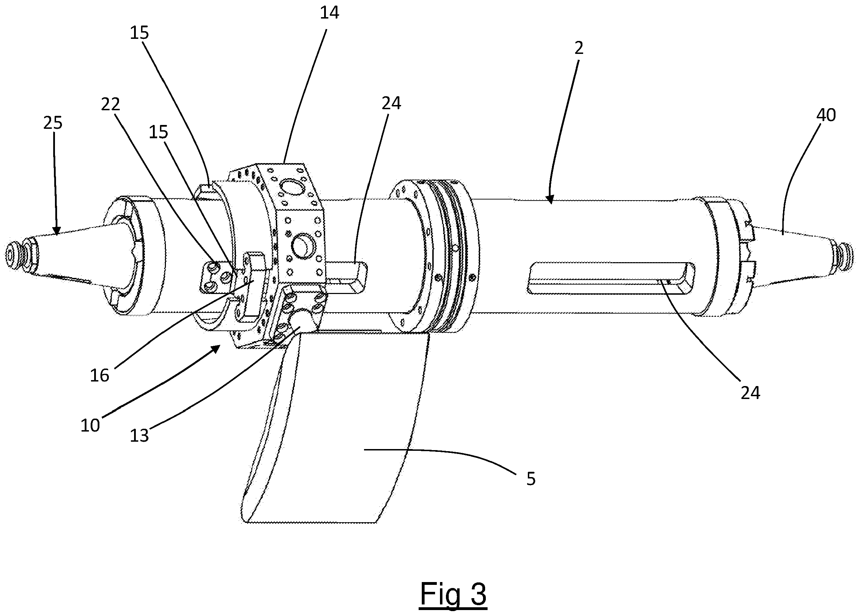

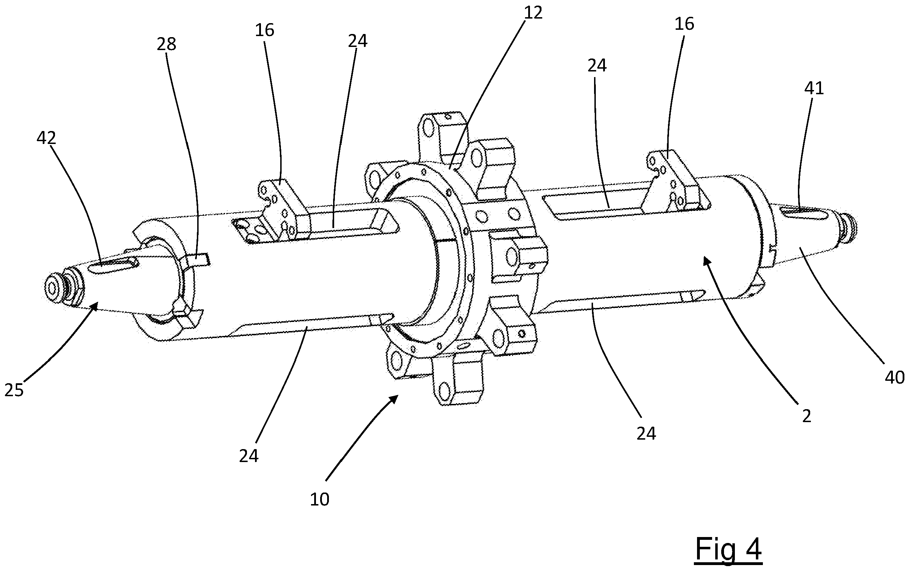

In order to allow the lateral deposition surfaces 3, 4 and the central deposition surface 7 to radially contract and expand, an expansion linkage 10 (illustrated only partially in Figures 3 and 4) is provided, configured to move the third sectors 8 in the radial direction. The radial movement of the third sectors 8 is transmitted to the first sectors 5 and to the second sectors 6.

As an example, the expansion linkage 10 can comprise a maneuvering shaft (not illustrated in the Figures) operatively associated with the central shaft 2. The maneuvering shaft is fixedly connected to a maneuvering ring 12 (illustrated in Figure 4) rotatably slotted onto the central shaft 2 and axially positioned at the third sectors 8. The latter are connected to the maneuvering ring 12 through a linkage (not illustrated) configured to transform a rotary motion of the maneuvering ring 12 into a radial shifting of the third sectors 8. Each first sector 5 and second sector 6 is connected to a first end of a telescopic support 13 which is connected to a second end of a crown 14 slidably slotted on the maneuvering shaft. By rotating the maneuvering shaft with respect to the central shaft 2 in a first angular direction from the service condition, a radial expansion of the third sectors 8 is actuated until the deposition condition is reached. The radial movement of the third sectors 8 also pulls the first sectors 5 and the second sectors 6 into the deposition condition. By rotating the maneuvering shaft with respect to the central shaft 2 in a second angular direction from the deposition condition, a radial contraction of the third sectors 8 is actuated until the service condition is reached. The radial movement of the third sectors 8 also pulls the first sectors 5 and the second sectors 6 into the service condition.

Said crown 14 has a plurality of openings 15 and is operatively associated with the central shaft 2, each opening 15 being crossed by a bracket 16 connected to the crown 14 and to the central shaft 2 (figure 3). The openings 15 allow the maneuvering shaft to rotate without setting in rotation the brackets 16 and therefore the central shaft 2.

The rotation of the drum 1 about the geometric axis X is obtained by rotating the central shaft 2 that sets in rotation the brackets 16 and with them the crown 14. The brackets 16 are positioned symmetrically with respect to the geometric axis X of the drum 1. The rotation of the crown 14 determines the rotation of the first sectors 5 and of the second sectors 6 which set in rotation the third sectors 8. The rotation of the third sectors 8 sets in rotation the maneuvering ring 12 which sets in rotation the maneuvering shaft. In this way, the central shaft 2 and the maneuvering shaft rotate as a unit with each other and the lateral and central deposition surfaces 3, 4 and 7 remain in the radial position taken up.

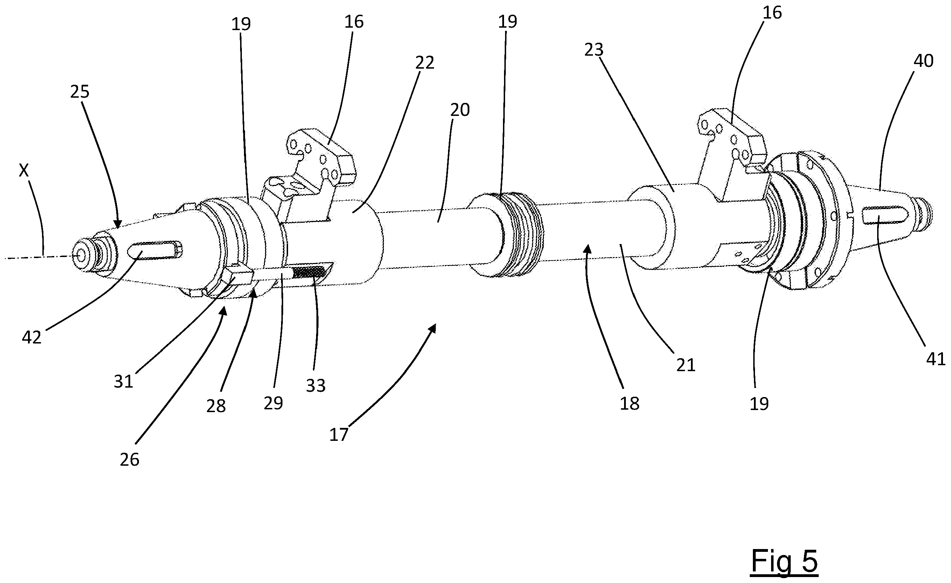

The drum 1 comprises an adjustment linkage 17 (illustrated in Figure 5), configured to axially move the two lateral deposition surfaces 3, 4 axially towards and away from one another and to define different axial dimensions for the forming drum 1.

The adjustment linkage 17 has no effect on the central deposition surface 7, in other words it does not change the axial position of the central deposition surface 7.

The lateral deposition surfaces 3, 4 are configured to insert at least partially below the central deposition surface 7 when the two lateral deposition surfaces 3, 4 are brought axially towards one another, so as to reduce the axial dimension of the forming drum 1 keeping a radially outer surface thereof substantially continuous.

The adjustment linkage 17 is actuated by an adjustment shaft 18 coaxial to the central shaft 2, arranged inside it and rotatable about the geometric axis X. Between the adjustment shaft 18 and the central shaft 2 rolling bearings 19 are radially interposed to allow a relative rotation between the adjustment shaft 18 and the central shaft 2.

The adjustment shaft 18 comprises a first threaded portion 20 and a second threaded portion 21 that have respective spirals with opposite thread (one right and the other left-handed). The two threaded portions each extend from a middle portion of the adjustment shaft 18 and extend axially away from such a middle portion (figure 5).

Respective internally threaded first carriage 22 and second carriage 23 are engaged on each of the two threaded portions 20, 21. A rotation of the adjustment shaft 18 with respect to the carriages 22, 23 causes a screwing in of the first carriage 22 and an unscrewing of the second carriage 23 on the respective threaded portion and the consequent shifting in the opposite axial direction of the two carriages 22, 23. Respective lateral deposition surfaces 3, 4 are connected to the first carriage 22 and to the second carriage 23. Therefore, the first sectors 5 and the second sectors 6 are respectively connected to the first carriage 22 and to the second carriage 23, so as to be able to move axially with the carriages 22, 23.

In particular, a respective bracket 16 that is connected to a respective crown 14 is mounted on each carriage 22, 23. As stated, a respective series of first sectors 5 or second sectors 6 is connected on each crown 14.

In order to allow the carriages 22, 23 to move axially without interfering with the central shaft 2, the central shaft 2 comprises an opening 24 for each bracket 16. Figure 4 shows openings 24 and brackets 16. As shown in the Figures, the openings 24 have an axial extension and are radially crossed by the brackets 16 so that the brackets 16 emerge from the openings 24 and can be constrained to the respective crowns 14. The openings 24 also have the function of locking the relative rotation between the carriages 22, 23 and the threaded portions 20, 21 of the adjustment shaft 18. For this purpose, the size in the circumferential direction of each opening 24 is substantially equal to the size in the circumferential direction of the bracket portion 16 that crosses the opening 24 itself.

From the above, by rotating the adjustment shaft 18 with respect to the central shaft 2 in a first angular direction, the two carriages 22, 23 shift axially towards one another moved by the threaded portions 20, 21 of the adjustment shaft 18 and forced to not rotate with the adjustment shaft 18 by the engagement of the respective brackets 16 in the openings 24. The two carriages axially move the crowns 14 to which the first and second sectors 5, 6 are constrained, moving them towards one another and reducing the axial size of the forming drum 1.

By rotating the adjustment shaft 18 with respect to the central shaft 2 in a second angular direction opposite to the first, the two carriages 22, 23 shift axially away from one another moved by the threaded portions 20, 21 of the adjustment shaft 18 and forced to not rotate with the adjustment shaft 18 by the engagement of the respective brackets 16 in the openings 24. The two carriages axially move the crowns 14 to which the first and second sectors 5, 6 are constrained, moving them away from one another and increasing the axial size of the forming drum 1.

The forming drum 1 comprises an actuation device 25 fixedly connected to the adjustment shaft 18. As shown in the attached Figures, the actuation device 25 is arranged at an axial end of the adjustment shaft 18 and axially protrudes from the central shaft 2. The actuation device 25 has the purpose of allowing a rotary motion to be transmitted to the adjustment shaft 18. In the preferred embodiment of the invention, the actuation device 25 has a substantially conical shape in order to be able to be engaged by an outer movement device, like for example a spindle.

On the axially opposite side with respect to the actuation device 25, the forming drum comprises a support device 40. The support device 40 is rotatably constrained to the central shaft 2 and is configured to transmit a rotary motion to the central shaft 2. Concerning this, the support device has a substantially conical shape in order to be able to be engaged by an outer movement device, like for example a spindle.

The support device 40 comprises at least one first pair of coupling elements 41, preferably diametrically opposite, configured to be engaged by the outer movement device. As an example, the first pair of coupling elements 41 can be made from grooves configured to be engaged by keys of the outer movement device.

Similarly, the actuation device 25 comprises at least one second pair of coupling elements 42, preferably diametrically opposite, configured to be engaged by the outer movement device. As an example, the second pair of coupling elements 42 can be made from grooves configured to be engaged by keys of the outer movement device.

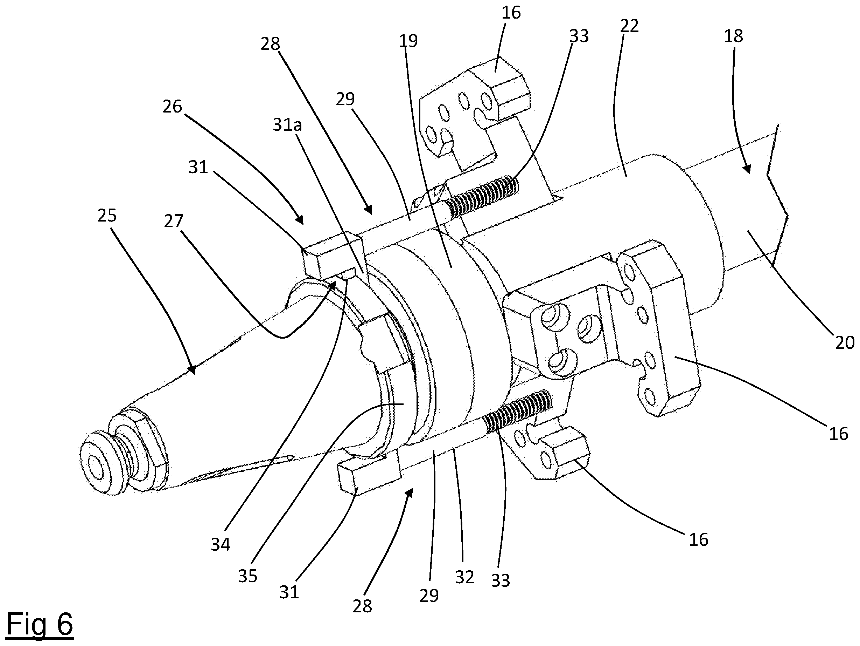

Operating on the actuation device 25 is at least one locking device 26 (better illustrated in Figures 5 and 6) which can be moved between a first condition in which it prevents the rotation of the actuation device 25 with respect to the central shaft 2 and a second condition in which it allows the relative rotation between the actuation device 25 and the central shaft 2.

When the locking device 26 is in the first condition, the central shaft 2 rotates together with the adjustment shaft 18 preventing the possibility of axial movement of the two lateral deposition surfaces 3, 4.

In the preferred embodiment of the invention, when the locking device 26 is in the first condition, the locking device rotatably couples the adjustment shaft 18 and the central shaft 2. In the first condition of the locking device 26, the forming drum 1 is usually made to rotate about the geometric axis X during the building of a tyre. When the locking device 26 is in the second condition, the central shaft 2 rotates with respect to the adjustment shaft 18 actuating the axial movement of the two lateral deposition surfaces 3, 4. In the second condition of the locking device 26, the forming drum 1 is in the step of changing its axial size.

The locking device 26, when in the first condition, defines a plurality of locking positions for the actuation device 25 in each of which the central shaft 2 is locked in rotation with respect to the adjustment shaft 18. In each locking position the adjustment shaft 18 takes up a predetermined angular position with respect to the central shaft 2. Therefore, depending on the locking position reached, the carriages 22, 23 take up predetermined axial positions along the adjustment shaft 18 corresponding to predetermined axial dimensions of the forming drum 1.

The locking positions are angularly spaced apart by a predetermined and unchanging angular distance, so that any two successive locking positions are angularly spaced by a same angular distance. Therefore, two positions of the carriages 22, 23 along the adjustment shaft 18 corresponding to two successive locking positions are axially spaced apart by a predetermined amount. In other words, two consecutive locking positions correspond to two axial sizes of the forming drum that are separated from one another by a predetermined amount.

In particular, the distance that separates the position taken up by the first carriage 22 at one locking position from the position taken up by the first carriage 22 at the next locking position is proportional to the pitch of the threading of the first threaded portion 20 of the adjustment shaft 18 and to the relative rotation carried out by the rotation shaft 18 with respect to the central shaft 2. Similarly, the distance that separates the position taken up by the second carriage 23 at one locking position from the position taken up by the second carriage 23 at the next locking position is proportional to the pitch of the threading of the second threaded portion 21 of the adjustment shaft 18 and to the relative rotation carried out by the rotation shaft 18 with respect to the central shaft 2. The distance that separates the position taken up by the first carriage 22 at one locking position from the position taken up by the first carriage 22 at the next locking position is equal to the distance that separates the position taken up by the second carriage 23 at one locking position from the position taken up by the second carriage 23 at the next locking position. The distance that separates the position taken up by the first carriage 22 at any locking position from the position taken up by the first carriage 22 at the next locking position is always the same. In the preferred embodiment of the invention, the distance that separates the position taken up by the first carriage 22 at any locking position from the position taken up by the first carriage 22 at the next locking position is comprised between 2 and 5 millimeters, even more preferably it is 2.5 millimeters.

In order to pass between two locking positions, the locking device 26 must be arranged in the second condition so as to allow a relative rotation between central shaft 2 and adjustment shaft 18.

As shown in Figure 6, the locking device 26 comprises at least one first locking element 27 connected to the actuation device 25 and at least one second locking element 28 connected to the central shaft 2.

The first locking element 27 and the second locking element 28 are configured to interact with one another to allow the adjustment shaft 18 to rotate with respect to the central shaft 2 and to prevent the rotation of the adjustment shaft 18 with respect to the central shaft 2. In particular, the first locking element 27 and the second locking element 28 are in mutual engagement when the locking device 26 is in the first condition, and the first locking element 27 and the second locking element 28 are not in mutual engagement when the locking device 26 is in the second condition.

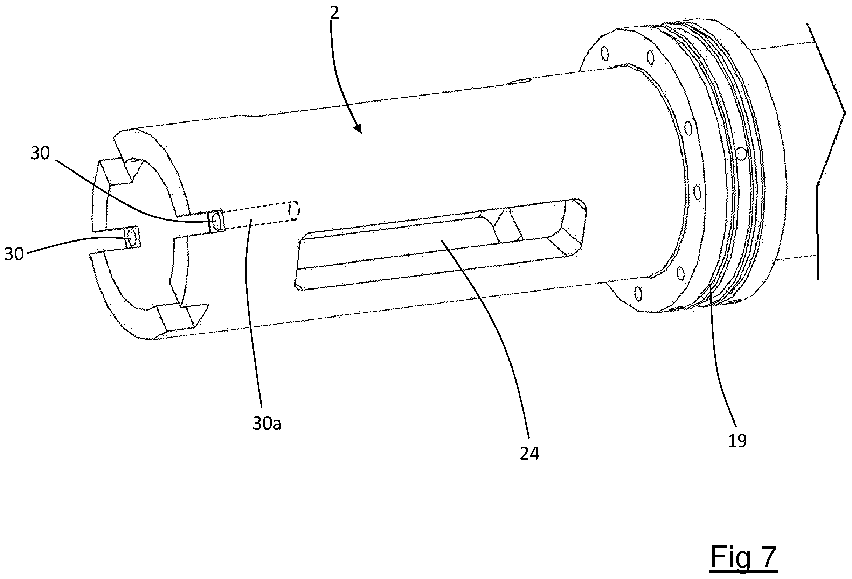

In the preferred embodiment of the invention, the second locking element 28 comprises a pin 29 constrained in rotation with the central shaft 2. The pin 29 is axially moveable with respect to the central shaft 2 between a stop condition in which it engages the first locking element 27 and a release condition in which it does not engage the first locking element 27. The pin 29 is partially inserted in a housing seat 30 made in the central shaft 2. The housing seat 30 is made from a blind axial hole 30a open at an axial end of the central shaft 2 (figure 7).

As illustrated in Figure 6, the pin 29 comprises a head 31 connected to a road 32, the head 31 is arranged at a first axial end of the rod 32 and, at a second axial end of the rod, an elastic element 33 is provided. The elastic element 33 is for example a linear spring. The rod 32 and the elastic element 33 are inserted in the housing seat 30 of the central shaft 2 with the head 31 emerging axially from the housing seat 30 and with the elastic element pushing the rod 32 in the axial direction towards the exit of the housing seat 30. The head 31 is equipped with an appendage 31a that extends in a radially inner direction.

The first locking element 27 comprises a seat 34 in the actuation device 25 engageable by the head 31 of the pin 29. As better illustrated in Figure 6, the seat 34 is formed on an annular portion 35 of the actuation device 25. The seat 34 in the actuation device 25 is shaped to match the appendage 31a of the head 31, so that the appendage 31a can be received inside the seat 34.

In the preferred embodiment of the invention, there are two locking devices 26 each equipped with a first locking element 27 and a second locking element 28. As illustrated in Figure 6, the two second locking elements 28 are spaced apart by 180°, in other words they are arranged in diametrically opposite position on the central shaft 2. Similarly, the two first locking elements 27 are spaced apart by 180°, in other words they are arranged in diametrically opposite position on the actuation device 25.

In order to change the axial size of the forming drum 1, the rotation of the drum is stopped and the forming drum is preferably not removed from the position occupied on the production line.

In this condition, the locking devices 26 are in a locking position of the first condition, in other words in a condition in which the adjustment shaft 18 rotates as a unit with the central shaft 2.

The locking devices 26 are thus arranged in the second condition in which the adjustment shaft 18 can rotate with respect to the central shaft 2.

In order to take the locking devices 26 into the second condition a force is imparted on the heads 31 of the second locking elements 28 so that the respective pins 29 increase their degree of penetration inside the housing seats 30 in contrast to the elastic element 33. The appendages 31a of the heads 31 thus disengage from the seats 34 of the first locking elements 27 formed in the actuation device 25 releasing the adjustment shaft 18 from rotating as a unit with the central shaft 2.

At this point, the adjustment shaft 18 (or the central shaft 2) is set in rotation and the central shaft 2 (or the adjustment shaft 18) is locked in rotation so as to obtain a relative rotation between the adjustment shaft 18 and the central shaft 2. The force exerted on the heads 31 can stop 179° before the final angular position of the mechanism, since the heads 31 are no longer aligned with the seats 34 and thus are not capable of engaging the seats 34 again and locking the mutual rotation between adjustment shaft 18 and central shaft 2.

As stated above, the rotation of the adjustment shaft 18 with respect to the central shaft 2 determines the axial shifting of the two carriages 22, 23, which move towards one another or apart (depending on the direction of relative rotation between the adjustment shaft 18 and the central shaft 2) moved by the threaded portions 20, 21 of the adjustment shaft 18 and forced not to rotate with the adjustment shaft 18 by the engagement of the respective brackets 16 in the openings 24. The two carriages 22, 23 axially move the crowns 14 to which the first and second sectors 5, 6 are constrained, moving them apart and increasing (or decreasing) the axial size of the forming drum 1.

The relative rotation between the adjustment shaft 18 and the central shaft 2 continues until the heads 31 are once again aligned with the seats 34. When alignment has occurred, the elastic elements 33 take the appendages 31a of the heads 31 back into engagement in the seats 34 of the actuation device 25 locking the adjustment shaft 18 in rotation with the central shaft 2 in a new and subsequent locking position.

In the preferred embodiment described, the new and subsequent locking position is reached after a relative rotation of 180° between the adjustment shaft 18 and the central shaft 2. Such a relative rotation corresponds to a shifting towards one another (or apart) of the two lateral deposition surfaces 3, 4 of 2.5 millimeters.

Clearly, the number of locking devices 26 and their mutual positioning can be selected as a function of the specific operative requirements of the forming drum, just as the amount of movement together and apart of the two lateral deposition surfaces 3, 4 between two successive locking positions can be selected as a function of the specific operative requirements of the forming drum.

The present invention has been described with reference to some preferred embodiments. Different modifications can be brought to the embodiments described above, whilst still being encompassed by the scope of protection of the invention, defined by the following claims.

## Claims

1. Forming drum (1) for producing tyres for vehicle wheels comprising:
a central shaft (2) concentric to a geometric rotation axis (X) of the forming drum;
two lateral deposition surfaces (3, 4) radially outer with respect to the central shaft (2) and axially opposite, wherein the two lateral deposition surfaces (3, 4) are set in rotation by the central shaft (2) around the geometric rotation axis (X);
an adjustment linkage (17), configured to axially move the two lateral deposition surfaces (3, 4) towards and away from one another, comprising an adjustment shaft (18) coaxial with the central shaft (2) wherein a relative rotation between the adjustment shaft (18) and the central shaft (2) actuates the adjustment linkage (17);
at least one actuation device (25) fixedly connected to the adjustment shaft (18); and **characterized by**
at least one locking device (26) operating on the actuation device (25) between a first condition in which it prevents the rotation of the actuation device (25) with respect to the central shaft (2) and a second condition in which it allows the relative rotation between the actuation device (25) and the central shaft (2);
the locking device (26), when in the first condition, defining a plurality of locking positions for the actuation device (25), wherein any locking position is reachable by the actuation device (25), starting from a previous locking position, following a relative and predetermined angular rotation between the actuation device (25) and the central shaft (2) with the locking device (26) in the second condition.

2. Forming drum (1) according to claim 1, wherein the locking device (26) comprises at least one first locking element (27) connected to the actuation device (25) and at least one second locking element (28) connected to the central shaft (2); the first locking element (27) and the second locking element (28) being engaged with one another when the locking device (26) is in the first condition, and the first locking element (27) and the second locking element (28) not being engaged with one another when the locking device (26) is in the second condition.

3. Forming drum (1) according to claim 2, wherein the at least one first locking element (27) and the at least one second locking element (28) are engageable with one another at least once by a rotation of 360° between the actuation device (25) and the central shaft (2).

4. Forming drum (1) according to claim 2 or 3, wherein the actuation device (25) is provided with at least two first locking elements (27) angularly spaced apart by 180° and wherein the central shaft (2) is provided with at least two second locking elements (28) angularly spaced apart by 180°.

5. Forming drum (1) according to any one of claims 2 to 4, wherein the second locking element (28) comprises a pin (29) that is movable with respect to the central shaft (2) between a stop condition in which it engages the first locking element (27) and a release condition in which it does not engage the first locking element (27); the pin (29) being slidable along an axial direction in a first direction between the stop condition and the release condition and in a second direction, opposite to the first, between the release condition and the stop condition; the central shaft (2) comprising a housing seat (30) for the pin (29) and the pin (29) being axially slidable inside the housing seat (30).

6. Forming drum (1) according to any one of claims 2 to 5, wherein the first locking element (27) comprises a seat (34) in the actuation device (25) configured to be engaged by a head (31) of the pin (29) when in the stop condition.

7. Forming drum (1) according to any one of the previous claims, wherein the actuation device (25) is arranged at a first axial end of the central shaft (25); a support device (40) fixedly connected to the central shaft (2) and rotatable with respect to the adjustment shaft (18) of the adjustment linkage (17) being arranged on a second axial end, opposite to the first, of the central shaft (2); the support device (40) comprising at least one first pair of coupling elements (41) configured to be engaged by a movement device outside of the forming drum.

8. Forming drum (1) according to any one of the previous claims, wherein the actuation device (25) comprises at least one second pair of coupling elements (42) configured to be engaged by a movement device outside of the forming drum.

9. Forming drum (1) according to any one of the previous claims, wherein the adjustment shaft (18) comprises a first threaded portion (20) with right or left spiral and a second threaded portion (21) with opposite spiral to the spiral of the first threaded portion (20); at least one first carriage (22) connected to one of the two lateral deposition surfaces (3, 4) being mounted on the first threaded portion (20) and at least one second carriage (23) connected to the other of the two lateral deposition surfaces (3, 4) being mounted on the second threaded portion (21); the central shaft (2) comprising openings (24) that extend in the axial direction and that are crossed in the radial direction by respective brackets (16) connected to the first carriage (22) and to the second carriage (23); each bracket (16) connecting a respective first carriage (22) or second carriage (23) to a respective lateral deposition surface (3, 4).

10. Forming drum (1) according to any one of the previous claims, comprising a central deposition surface (8) arranged between the two lateral deposition surfaces (3, 4); the central deposition surface (8) being radially outside of the central shaft (2) and rotatably coupled with the central shaft (2); the two lateral deposition surfaces (3, 4) comprising end portions axially facing towards the central deposition surface (8) and configured to insert radially inside the central deposition surface (8).

11. Method for controlling the geometry of a forming drum (1) for producing tyres for vehicle wheels comprising:
arranging a central shaft (2) concentric to a geometric rotation axis (X) of the forming drum;
arranging two lateral deposition surfaces (3, 4) radially outside of the central shaft (2) and axially opposite and rotatably coupling the central shaft (2) with the two lateral deposition surfaces (3, 4);
arranging an adjustment shaft (18) coaxial to the central shaft (2) and rotatable with respect to the central shaft (2) and coupling the two lateral deposition surfaces (3, 4) with the adjustment shaft (18);
configuring the adjustment shaft (18) so that a rotation of the adjustment shaft (18) with respect to the central shaft (2) corresponds to an axial shifting of the two lateral deposition surfaces (3, 4);
arranging at least one plurality of predetermined locking positions between the adjustment shaft (18) and the central shaft (2) in which the adjustment shaft (18) is constrained in rotation to the central shaft (2) and wherein every locking position corresponds to a relative and predetermined angular position between adjustment shaft (18) and central shaft (2);
rotating the adjustment shaft (18) with respect to the central shaft (2), wherein the rotation of the adjustment shaft (18) with respect to the central shaft (2) is actuated from a locking position until a further locking position is reached.

12. Method according to claim 11, wherein the relative rotation between the adjustment shaft (18) and the central shaft (2) takes place for an identical angular quantity between two mutually successive locking positions.

13. Method according to claim 11 or 12, wherein, starting from a locking position, at a relative rotation of 360° between adjustment shaft (18) and central shaft (2) a further locking position is reached and wherein every relative rotation of 360° between adjustment shaft (18) and central shaft (2) intercepts at least two locking positions.

14. Method according to any one of claims 11 to 13, wherein the relative rotation between the adjustment shaft (18) and the central shaft (2) is carried out by locking the adjustment shaft (18) and rotating the central shaft (2).

15. Method according to any one of claims 11 to 14, comprising arranging at least one first locking device (26) operating on the adjustment shaft (18) between a first condition in which it prevents the rotation of the adjustment shaft (18) with respect to the central shaft (2) and a second condition in which it allows the rotation of the adjustment shaft (18) with respect to the central shaft (2); wherein, starting from a locking position carried out by said at least one first locking device (26), at a relative rotation of 360° between adjustment shaft (18) and central shaft (2) a further locking position carried out by the same at least one first locking device (26) is reached.

## Patentansprüche

1. Formungstrommel (1) zum Produzieren von Reifen für Fahrzeugräder, umfassend:
eine Zentralwelle (2), die konzentrisch mit einer geometrischen Drehachse (X) der Formungstrommel ist;
zwei seitliche Ablageoberflächen (3, 4) radial außerhalb in Bezug auf die Zentralwelle (2) und einander axial gegenüberliegend, wobei die zwei seitlichen Ablageoberflächen (3, 4) durch die Zentralwelle (2) um die geometrische Drehachse (X) herum in Drehung versetzt werden;
ein Einstellgestänge (17), das so ausgestaltet ist, dass es die beiden seitlichen Ablageoberflächen (3, 4) axial aufeinander zu und voneinander weg bewegt, und das eine Einstellwelle (18) umfasst, die koaxial mit Zentralwelle (2) ist, wobei eine relative Drehung zwischen der Einstellwelle (18) und der Zentralwelle (2) das Einstellgestänge (17) betätigt;
zumindest eine Betätigungsvorrichtung (25), die fest mit der Einstellwelle (18) verbunden ist; und **gekennzeichnet durch**
mindestens eine Verriegelungsvorrichtung (26), die auf die Betätigungsvorrichtung (25) zwischen einem ersten Zustand, in dem sie die Drehung der Betätigungsvorrichtung (25) in Bezug auf die Zentralwelle (2) verhindert, und einem zweiten Zustand, in dem sie die relative Drehung zwischen der Betätigungsvorrichtung (25) und der Zentralwelle (2) ermöglicht, einwirkt;
wobei die Verriegelungsvorrichtung (26) in dem ersten Zustand eine Vielzahl von Verriegelungspositionen für die Betätigungsvorrichtung (25) definiert, wobei jede Verriegelungsposition durch die Betätigungsvorrichtung (25) ausgehend von einer vorhergehenden Verriegelungsposition einer relativen und vorbestimmten Winkeldrehung zwischen der Betätigungsvorrichtung (25) und der Zentralwelle (2) folgend erreicht werden kann, wenn sich die Verriegelungsvorrichtung (26) in dem zweiten Zustand befindet.

2. Formungstrommel (1) nach Anspruch 1, wobei die Verriegelungsvorrichtung (26) zumindest ein erstes Verriegelungselement (27) umfasst, das mit der Betätigungsvorrichtung (25) verbunden ist, und zumindest ein zweites Verriegelungselement (28), das mit der Zentralwelle (2) verbunden ist; wobei das erste Verriegelungselement (27) und das zweite Verriegelungselement (28) miteinander in Eingriff stehen, wenn die Verriegelungsvorrichtung (26) in dem ersten Zustand ist, und das erste Verriegelungselement (27) und das zweite Verriegelungselement (28) nicht miteinander in Eingriff stehen, wenn die Verriegelungsvorrichtung (26) in dem zweiten Zustand ist.

3. Formungstrommel (1) nach Anspruch 2, wobei das zumindest eine erste Verriegelungselement (27) und das zumindest eine zweite Verriegelungselement (28) miteinander zumindest einmal durch eine Drehung von 360° zwischen der Betätigungsvorrichtung (25) und der Zentralwelle (2) in Eingriff bringbar sind.

4. Formungstrommel (1) nach Anspruch 2 oder 3, wobei die Betätigungsvorrichtung (25) mit zumindest zwei ersten Verriegelungselementen (27) versehen ist, die in einem Winkelabstand von 180° voneinander beabstandet sind, und wobei die Zentralwelle (2) mit zumindest zwei zweiten Verriegelungselemente (28) versehen ist, die in einem Winkelabstand von 180° voneinander beabstandet sind.

5. Formungstrommel (1) nach einem der Ansprüche 2 bis 4, wobei das zweite Verriegelungselement (28) einen Stift (29) umfasst, der in Bezug auf die Zentralwelle (2) zwischen einem Stoppzustand, in welchem er mit dem ersten Verriegelungselement (27) in Eingriff steht, und einem Freigabezustand, in welchem er nicht mit dem ersten Verriegelungselement (27) in Eingriff steht, beweglich ist; wobei der Stift (29) entlang einer axialen Richtung in eine erste Richtung zwischen dem Stoppzustand und dem Freigabezustand verschiebbar ist, sowie in eine zweite, der ersten entgegengesetzte Richtung zwischen dem Freigabezustand und dem Stoppzustand; wobei die Zentralwelle (2) einen Aufnahmesitz (30) für den Stift (29) aufweist und der Stift (29) axial in dem Aufnahmesitz (30) verschiebbar ist.

6. Formungstrommel (1) nach einem der Ansprüche 2 bis 5, wobei das erste Verriegelungselement (27) einen Sitz (34) in der Betätigungsvorrichtung (25) umfasst, der dazu ausgestaltet ist, in dem Stoppzustand mit einem Kopf (31) des Stifts (29) in Eingriff zu gelangen.

7. Formungstrommel (1) nach einem der vorhergehenden Ansprüche, wobei die Betätigungsvorrichtung (25) an einem ersten axialen Ende der Zentralwelle (25) angeordnet ist; wobei eine Trägervorrichtung (40), die mit der Zentralwelle (2) fest verbunden und in Bezug auf die Einstellwelle (18) des Einstellgestänges (17) drehbar ist, an einem zweiten, dem ersten entgegengesetzten axialen Ende der Zentralwelle (2) angeordnet ist; wobei die Trägervorrichtung (40) zumindest ein erstes Paar von Kopplungselementen (41) umfasst, die dazu ausgestaltet sind, mit einer Bewegungsvorrichtung außerhalb der Formungstrommel in Eingriff zu gelangen.

8. Formungstrommel (1) nach einem der vorhergehenden Ansprüche, wobei die Betätigungsvorrichtung (25) zumindest ein zweites Paar von Kopplungselementen (42) umfasst, die dazu ausgestaltet sind, mit einer Bewegungsvorrichtung außerhalb der Formungstrommel in Eingriff zu gelangen.

9. Formungstrommel (1) nach einem der vorhergehenden Ansprüche, wobei die Einstellwelle (18) einen ersten Gewindeabschnitt (20) mit Rechts- oder Linksgewinde und einen zweiten Gewindeabschnitt (21) mit zur Gewinderichtung des ersten Gewindeabschnitts (20) entgegengesetzter Gewinderichtung aufweist; mindestens einen ersten Schlitten (22), der mit einer der beiden seitlichen Ablageoberflächen (3, 4) verbunden ist und auf dem ersten Gewindeabschnitt (20) montiert ist, und mindestens einen zweiten Schlitten (23), der mit der anderen der beiden seitlichen Ablageoberflächen (3, 4) verbunden ist und auf dem zweiten Gewindeabschnitt (21) montiert ist; wobei die Zentralwelle (2) Öffnungen (24) umfasst, die sich in der axialen Richtung erstrecken und die in der radialen Richtung von jeweiligen Halterungen (16) gekreuzt werden, die mit dem ersten Schlitten (22) und und dem zweiten Schlitten (23) verbunden sind; wobei jede Halterung (16) einen jeweiligen ersten Schlitten (22) oder zweiten Schlitten (23) mit einer jeweiligen seitlichen Ablageoberfläche (3, 4) verbindet.

10. Formungstrommel (1) nach einem der vorhergehenden Ansprüche, umfassend eine zentrale Ablageoberfläche (8), die zwischen den zwei seitlichen Ablageoberflächen (3, 4) angeordnet ist; wobei die zentrale Ablageoberfläche (8) radial außerhalb der Zentralwelle (2) liegt und drehbar mit der Zentralwelle (2) gekoppelt ist; wobei die zwei seitlichen Ablageoberflächen (3, 4) zwei Endabschnitte umfassen, die axial der zentralen Ablageoberfläche (8) zugewandt sind und dazu ausgestaltet sind, sich radial innerhalb der zentralen Ablageoberfläche (8) einzufügen.

11. Verfahren zur Steuerung der Geometrie einer Formungstrommel (1) zum Produzieren von Reifen für Fahrzeugräder, umfassend:
Anordnen einer Zentralwelle (2) konzentrisch mit einer geometrischen Drehachse (X) der Formungstrommel;
Anordnen von zwei seitlichen Ablageoberflächen (3, 4) radial außerhalb der Zentralwelle (2) und einander axial entgegengesetzt, und drehbares Koppeln der Zentralwelle (2) mit den zwei seitlichen Ablageoberflächen (3, 4);
Anordnen einer Einstellwelle (18) koaxial mit der Zentralwelle (2) und drehbar in Bezug auf die Zentralwelle (2) und Koppeln der zwei seitlichen Ablageoberflächen (3, 4) mit der Einstellwelle (18);
Konfigurieren der Einstellwelle (18), so dass eine Drehung der Einstellwelle (18) in Bezug auf die Zentralwelle (2) einer axialen Verschiebung der zwei seitlichen Ablageoberflächen (3, 4) entspricht;
Anordnen zumindest einer Vielzahl von vorbestimmten Verriegelungspositionen zwischen der Einstellwelle (18) und der Zentralwelle (2), in welchen die Einstellwelle (18) in der Drehung zu der Zentralwelle (2) eingeschränkt wird, und wobei jede Verriegelungsposition einer relativen und vorbestimmten Winkelposition zwischen der Einstellwelle (18) und der Zentralwelle (2) entspricht;
Drehen der Einstellwelle (18) in Bezug auf die Zentralwelle (2), wobei die Drehung der Einstellwelle (18) in Bezug auf die Zentralwelle (2) von einer Verriegelungsposition aus betätigt wird, bis eine weitere Verriegelungsposition erreicht wird.

12. Verfahren nach Anspruch 11, wobei die relative Drehung zwischen der Einstellwelle (18) und der Zentralwelle (2) in einem identischen Winkelabstand zwischen zwei aufeinander folgenden Verriegelungspositionen erfolgt.

13. Verfahren nach Anspruch 11 oder 12, wobei ausgehend von einer Verriegelungsposition bei einer relativen Drehung von 360° zwischen Einstellwelle (18) und Zentralwelle (2) eine weitere Verriegelungsposition erreicht wird und wobei jede relative Drehung von 360° zwischen Einstellwelle (18) und Zentralwelle (2) zumindest zwei Verriegelungspositionen trennt.

14. Verfahren nach einem der Ansprüche 11 bis 13, wobei die relative Drehung zwischen der Einstellwelle (18) und der Zentralwelle (2) durch Verriegeln der Einstellwelle (18) und Drehen der Zentralwelle (2) erfolgt.

15. Verfahren nach einem der Ansprüche 11 bis 14, umfassend das Anordnen zumindest einer ersten Verriegelungsvorrichtung (26), die auf die Einstellwelle (18) zwischen einem ersten Zustand, in welchem sie die Drehung der Einstellwelle (18) in Bezug auf die Zentralwelle (2) verhindert, und einem zweiten Zustand, in welchem sie die Drehung der Einstellwelle (18) in Bezug auf die Zentralwelle (2) erlaubt, einwirkt; wobei, ausgehend von einer Verriegelungsposition, die von der zumindest einen ersten Verriegelungsvorrichtung (26) ausgeführt wird, bei einer relativen Drehung von 360° zwischen Einstellwelle (18) und Zentralwelle (2) eine weitere Verriegelungsposition von derselben zumindest einen ersten Verriegelungsvorrichtung (26) ausgeführt wird.

## Revendications

1. Tambour de formation (1) pour la production de pneus pour roues de véhicule comprenant :
un arbre central (2) concentrique à un axe de rotation géométrique (X) du tambour de formation ;
deux surfaces de dépôt latérales (3, 4) radialement externes par rapport à l'arbre central (2) et axialement opposées, où les deux surfaces de dépôt latérales (3, 4) sont mises en rotation par l'arbre central (2) autour de l'axe de rotation géométrique (X) ;
une tringlerie de réglage (17), configurée pour déplacer axialement les deux surfaces de dépôt latérales (3, 4) l'une vers l'autre et loin l'une de l'autre, comprenant un arbre de réglage (18) coaxial avec l'arbre central (2) où une rotation relative entre l'arbre de réglage (18) et l'arbre central (2) actionne la tringlerie de réglage (17) ;
au moins un dispositif d'actionnement (25) relié de manière fixe à l'arbre de réglage (18) ; et **caractérisé par**
au moins un dispositif de verrouillage (26) fonctionnant sur le dispositif d'actionnement (25) entre un premier état où il empêche la rotation du dispositif d'actionnement (25) par rapport à l'arbre central (2) et un deuxième état où il permet la rotation relative entre le dispositif d'actionnement (25) et l'arbre central (2) ;
le dispositif de verrouillage (26), lorsqu'il est dans le premier état, définissant une pluralité de positions de verrouillage pour le dispositif d'actionnement (25), où toute position de verrouillage peut être atteinte par le dispositif d'actionnement (25), à partir d'une position de verrouillage précédente, à la suite d'une rotation angulaire relative et prédéterminée entre le dispositif d'actionnement (25) et l'arbre central (2) avec le dispositif de verrouillage (26) dans le deuxième état.

2. Tambour de formation (1) selon la revendication 1, dans lequel le dispositif de verrouillage (26) comprend au moins un premier élément de verrouillage (27) relié au dispositif d'actionnement (25) et au moins un deuxième élément de verrouillage (28) relié à l'arbre central (2) ; le premier élément de verrouillage (27) et le deuxième élément de verrouillage (28) étant engagés l'un avec l'autre lorsque le dispositif de verrouillage (26) est dans le premier état, et le premier élément de verrouillage (27) et le deuxième élément de verrouillage (28) n'étant pas engagés l'un avec l'autre lorsque le dispositif de verrouillage (26) est dans le deuxième état.

3. Tambour de formation (1) selon la revendication 2, dans lequel l'au moins un premier élément de verrouillage (27) et l'au moins un deuxième élément de verrouillage (28) peuvent s'engager l'un avec l'autre au moins une fois par une rotation de 360° entre le dispositif d'actionnement (25) et l'arbre central (2).

4. Tambour de formation (1) selon la revendication 2 ou 3, dans lequel le dispositif d'actionnement (25) est muni d'au moins deux premiers éléments de verrouillage (27) angulairement espacés de 180° et dans lequel l'arbre central (2) est muni d'au moins deux deuxièmes éléments de verrouillage (28) angulairement espacés de 180°.

5. Tambour de formation (1) selon l'une quelconque des revendications 2 à 4, dans lequel le deuxième élément de verrouillage (28) comprend une broche (29) qui est mobile par rapport à l'arbre central (2) entre un état d'arrêt où elle s'engage avec le premier élément de verrouillage (27) et un état de libération où elle ne s'engage pas avec le premier élément de verrouillage (27) ; la broche (29) pouvant coulisser le long d'une direction axiale dans une première direction entre l'état d'arrêt et l'état de libération et dans une deuxième direction, opposée à la première, entre l'état de libération et l'état d'arrêt ; l'arbre central (2) comprenant un siège de boîtier (30) pour la broche (29) et la broche (29) pouvant coulisser axialement à l'intérieur du siège de boîtier (30).

6. Tambour de formation (1) selon l'une quelconque des revendications 2 à 5, dans lequel le premier élément de verrouillage (27) comprend un siège (34) dans le dispositif d'actionnement (25) configuré pour être engagé par une tête (31) de la broche (29) lorsqu'elle est dans l'état d'arrêt.

7. Tambour de formation (1) selon l'une quelconque des revendications précédentes, dans lequel le dispositif d'actionnement (25) est agencé au niveau d'une première extrémité axiale de l'arbre central (25) ; un dispositif de support (40) relié de manière fixe à l'arbre central (2) et pouvant tourner par rapport à l'arbre de réglage (18) de la tringlerie de réglage (17) étant agencé sur une deuxième extrémité axiale, opposée à la première, de l'arbre central (2) ; le dispositif de support (40) comprenant au moins une première paire d'éléments de couplage (41) configurés pour être engagés par un dispositif de mouvement à l'extérieur du tambour de formation.

8. Tambour de formation (1) selon l'une quelconque des revendications précédentes, dans lequel le dispositif d'actionnement (25) comprend au moins une deuxième paire d'éléments de couplage (42) configurés pour être engagés par un dispositif de mouvement à l'extérieur du tambour de formation.

9. Tambour de formation (1) selon l'une quelconque des revendications précédentes, dans lequel l'arbre de réglage (18) comprend une première partie filetée (20) avec une spirale droite ou gauche et une deuxième partie filetée (21) avec une spirale opposée à la spirale de la première partie filetée (20) ; au moins un premier chariot (22) relié à l'une des deux surfaces de dépôt latérales (3, 4) étant monté sur la première partie filetée (20) et au moins un deuxième chariot (23) relié à l'autre des deux surfaces de dépôt latérales (3, 4) étant monté sur la deuxième partie filetée (21) ; l'arbre central (2) comprenant des ouvertures (24) qui s'étendent dans la direction axiale et qui sont traversées dans la direction radiale par des supports respectifs (16) reliés au premier chariot (22) et au deuxième chariot (23) ; chaque support (16) reliant un premier chariot (22) ou un deuxième chariot (23) respectif à une surface de dépôt latérale respective (3, 4).

10. Tambour de formation (1) selon l'une quelconque des revendications précédentes, comprenant une surface de dépôt centrale (8) agencée entre les deux surfaces de dépôt latérales (3, 4) ; la surface de dépôt centrale (8) étant radialement à l'extérieur de l'arbre central (2) et couplée en rotation à l'arbre central (2) ; les deux surfaces de dépôt latérales (3, 4) comprenant des parties d'extrémité axialement orientées vers la surface de dépôt centrale (8) et configurées pour s'insérer radialement dans la surface de dépôt centrale (8).

11. Procédé de contrôle de la géométrie d'un tambour de formation (1) pour la production de pneus pour roues de véhicule comprenant :
l'agencement d'un arbre central (2) concentrique à un axe de rotation géométrique (X) du tambour de formation ;
l'agencement de deux surfaces de dépôt latérales (3, 4) radialement à l'extérieur de l'arbre central (2) et axialement opposées et le couplage rotatif de l'arbre central (2) avec les deux surfaces de dépôt latérales (3, 4) ;
l'agencement d'un arbre de réglage (18) coaxial à l'arbre central (2) et pouvant tourner par rapport à l'arbre central (2) et le couplage des deux surfaces de dépôt latérales (3, 4) avec l'arbre de réglage (18) ;
la configuration de l'arbre de réglage (18) de sorte qu'une rotation de l'arbre de réglage (18) par rapport à l'arbre central (2) corresponde à un déplacement axial des deux surfaces de dépôt latérales (3, 4) ;
l'agencement d'au moins une pluralité de positions de verrouillage prédéterminées entre l'arbre de réglage (18) et l'arbre central (2) où l'arbre de réglage (18) est contraint en rotation à l'arbre central (2) et où chaque position de verrouillage correspond à une position angulaire relative et prédéterminée entre l'arbre de réglage (18) et l'arbre central (2) ;
la rotation de l'arbre de réglage (18) par rapport à l'arbre central (2), où la rotation de l'arbre de réglage (18) par rapport à l'arbre central (2) est actionnée depuis une position de verrouillage jusqu'à ce qu'une position de verrouillage supplémentaire soit atteinte.

12. Procédé selon la revendication 11, dans lequel la rotation relative entre l'arbre de réglage (18) et l'arbre central (2) s'effectue pour une quantité angulaire identique entre deux positions de verrouillage mutuellement successives.

13. Procédé selon la revendication 11 ou 12, dans lequel, à partir d'une position de verrouillage, lors d'une rotation relative de 360° entre un arbre de réglage (18) et un arbre central (2), une position de verrouillage supplémentaire est atteinte et dans lequel chaque rotation relative de 360° entre l'arbre de réglage (18) et l'arbre central (2) intercepte au moins deux positions de verrouillage.

14. Procédé selon l'une quelconque des revendications 11 à 13, dans lequel la rotation relative entre l'arbre de réglage (18) et l'arbre central (2) est réalisée par verrouillage de l'arbre de réglage (18) et rotation de l'arbre central (2).

15. Procédé selon l'une quelconque des revendications 11 à 14, comprenant l'agencement d'au moins un premier dispositif de verrouillage (26) fonctionnant sur l'arbre de réglage (18) entre un premier état où il empêche la rotation de l'arbre de réglage (18) par rapport à l'arbre central (2) et un deuxième état où il permet la rotation de l'arbre de réglage (18) par rapport à l'arbre central (2) ; où, à partir d'une position de verrouillage réalisée par ledit au moins un premier dispositif de verrouillage (26), lors d'une rotation relative de 360° entre l'arbre de réglage (18) et l'arbre central (2), une position de verrouillage supplémentaire réalisée par le même au moins un premier dispositif de verrouillage (26) est atteinte.
